# EUROPÄISCHE PATENTSCHRIFT

(11) **EP 1 203 949 B1**
(45) Veröffentlichungstag und Bekanntmachung des Hinweises auf die Patenterteilung: **29.11.2006**
(21) Anmeldenummer: 01125372.1
(22) Anmeldetag: 30.10.2001
(51) Int. Cl.: G01N 27/28

(54) **Wechselarmatur mit einem Sensor**
Changeover fitting with a sensor
Armature d'échangement avec un capteur

(30) Priorität: 02.11.2000 DE 10054272
(43) Veröffentlichungstag der Anmeldung: 08.05.2002
(73) Patentinhaber: Endress + Hauser Conducta Gesellschaft für Mess- und Regeltechnik mbH + Co.KG., D-70839 Gerlingen (DE)
(72) Erfinder: Beck, Bernhard, 70563 Stuttgart (DE); Exner, Detlef, 41516 Grevenbroich (DE)
(74) Vertreter: Andres, Angelika Maria

(56) Entgegenhaltungen:
- EP-A- 0 590 290
- EP-A- 0 882 896
- DE-A- 3 834 240
- DE-A- 3 940 948
- DE-A- 19 546 266
- DE-A- 19 720 504
- DE-U- 9 202 350
- US-A- 5 639 975
- US-A- 6 000 290

## Beschreibung

Die Erfindung betrifft eine Wechselarmatur mit einem Armaturengehäuse gemäß Anspruch 1.

Eine derartige Wechselarmatur kann zur Messung der verschiedensten Größen ausgebildet sein. Insbesondere können hiermit Messungen in fluiden Medien, insbesondere zur pH-, Redox-, Leitfähigkeits-, Sauerstoffgehalts- und Chlormessung durchgeführt werden.

So ist beispielsweise aus der DE 197 20 504 eine Vorrichtung zur Aufnahme und Halterung einer Messelektrode zum Durchführung von Messungen in fluiden Medien bekannt, die ein Gehäuse, eine im Gehäuse axial gleitverschieblich gelagerte Innenhülse, in der die Messelektrode untergebracht ist, umfasst, wobei die Innenhülse gegenüber dem Gehäuse derart verschieblich ist, dass ein einen Zutritt des fluiden Mediums zur Messelektrodenspitze erlaubender Abschnitt der Innenhülse aus dem Gehäuse ausfahrbar ist, um in Kontakt mit dem flüssigen Medium zu treten und wieder in das Gehäuse einfahrbar ist, um die Medienseite der Messelektrode bzw. den dieser zugeordneten Abschnitt der Innenhülse zu reinigen, zu sterilisieren oder zur kalibrieren oder die Messelektrode gegen eine andere auszutauschen.

Derartige Messsondenarmaturen finden Verwendung bei Eintauch-, Durchfluss- und Anbaumesssystemen beispielsweise in der analytischen Chemie, in der Prozess- und Verfahrenstechnik, in der Messtechnik für Abwasser, in der Lebensmittelchemie und der pharmazeutischen Chemie.

Sie werden vielfach auch als Schleusearmaturen bezeichnet. Mit ihrem Gehäuse, das wie die darin geführte Führungseinrichtung ebenfalls rohrförmig ausgebildet sein kann, werden Sie an einem das fluide Prozess- oder Messmedium enthaltenden oder führenden Behälter oder Rohr stationär angeordnet. Um die Messsonde zu reinigen oder zu kalibrieren muss die Armatur nicht demontiert werden, sondern die Führungseinrichtung wird mitsamt der Messsonde aus dem Prozess- oder Messmedium heraus in das Armaturengehäuse zurückgezogen und dort in einer gegen die Medienseite abgedichteten Reinigungs- oder Kalibrierkammer in der erforderlichen Weise behandelt.

Eine entsprechende Armatur ist ebenfalls aus der DE 2 061 978 C2 bekannt, die eine Messwertgebereinrichtung zur Befestigung an einer Behälteröffnung mit herausnehmbarer Messwertgebersonde, einem Absperrorgan sowie einer Führungseinrichtung offenbart, die den Körper der Sonde koaxial umschließt.

Sofern im Folgenden der Ausdruck Behälter verwendet wird, soll dies in allgemeinster Form verstanden werden und nicht nur Gefäße beliebigster Art, sondern auch Leitungen, Kanäle usw. einschließen.

Tritt nun, bzw. wird nun die Messsonde in einen Behälter eingeführt, in dem in der Regel ein Prozessüberdruck herrscht, so muss die Messsonde gegen den Druck bewegt werden. Der Querschnitt der Führungseinrichtung ist damit der Querschnitt, auf den der Prozessdruck wirkt. Je höher der Prozessüberdruck ist, desto größere Betätigungskräfte werden zum Eindringen der Messsonde in den Prozess nötig. Bei bisher üblichen Gestaltungen, bei denen der Sondendurchmesser beispielsweise 40 mm beträgt, war es aufgrund des größeren notwendigen Durchmessers der Führungseinrichtung, in der die Sonde geführt war, bisher lediglich möglich, die Messsonde gegen einen Prozessdruck von 4 bar in den Behälter einzuschieben. Standard-Trinkwasseranwendungen mit 8 bar Prozessüberdruck konnten daher bisher nicht gehandhabt werden.

Eine gattungsgemäße Gassonde ist aus DE 92 02 350 U1 bekannt, bei der allerdings ein Teil des Armaturengehäuses in den Behälter ragt. Eine weitere gattungsgemäße Wechselarmatur zeigt die US-A-5, 639, 975.

Es ist daher Aufgabe der Erfindung, eine Wechselarmatur bereitzustellen, mit der auch in Hochdruckanwendungen ein Wechsel der Messsonden zum Zwecke der Reinigung, Sterilisation und Kalibrierung etc. während des Prozesses möglich ist, ohne dass die Gefahr des Austritts von Prozessfluiden besteht.

Die Erfindung löst diese Aufgabe durch eine Wechselarmatur gemäß Anspruch 1.

Der Sensor kann dabei auch integraler Bestandteil des Messsondenkörpers sein.

Die Messsonde mit ihrem Messsondenkörper wird bei der vorliegenden Erfindung nicht länger in der Führungseinrichtung montiert, d.h. nicht länger durch die Führungseinrichtung koaxial umschlossen. Vielmehr wird der Sensor an einer Stirnseite, nämlich der in Richtung auf den Behälter weisenden Stirnseite der Führungseinrichtung befestigt. Bei einer derartigen Gestaltung ist es nicht länger notwendig, dass der Querschnitt bzw. der Durchmesser der Führungseinrichtung größer ist als der Durchmesser bzw. der Querschnitt der Messsonde. Damit bestimmt bei einer derartigen Ausgestaltung nicht länger der Querschnitt der Führungseinrichtung sondern der Querschnitt der Messsonde den Grenzdruck, bis zu dem der Sensor in ein Behältnis einführbar ist. Trotz eines Sondendurchmessers von 40 mm kann eine Sonde jetzt bis 8 bar Prozessdruck gegen diesen in das Behältnis eingeführt werden. Bei einer derartigen Ausgestaltung muss das Armaturengehäuse um die Sensorlänge verlängert werden, so dass der Sensor zurückgezogen in Stand-by-Position in diesem Gehäuse Platz findet und das Absperrorgan geschlossen werden kann. Eine derartige Ausgestaltung bietet den Vorteil, dass der Durchmesser bzw. der Querschnitt der Führungseinrichtung völlig unabhängig vom Durchmesser bzw. dem Querschnitt der Messsonde ist.

Das Absperrorgan kann insbesondere ein Kugelventil sein, das mittels eines Handgriffes bzw. eines Betätigungshebels betätigt wird, der von einer Stellung in axialer Richtung der Armatur (Durchgangsstellung) in eine Stellung senkrecht hierzu (Sperrstellung) verschwenkbar ist. Es kann dabei vorgesehen sein, dass der Betätigungshebel mit einem Betätigungsmittel der Befestigungseinrichtung derart zusammenwirkt, dass er das Betätigungsmittel bzw. die Befestigungseinrichtung in ihrer Stellung blockiert.

Als Befestigungseinrichtung kann eine Zugverschraubung vorgesehen sein, die eine Zugeinheit und eine Verschraubungseinheit umfasst, die mit der Zugeinheit zusammenwirkt, wobei die Zugeinheit an der Armatur geführt ist und die Zugeinheit und die Messsonde oder die Führungseinrichtung in Formschluss bringbar sind, wobei durch Drehen der Verschraubungseinheit die Zugeinheit mit der Messsonde verspannbar ist. Eine derartige Zugeinheit überbrückt beliebige Längen des Armaturengehäuses. Nach Lösen der Zugverschraubung gibt die Zugeinheit die Führungseinheit oder die Messsonde frei, so dass die Messsonde aus der Armatur entnehmbar ist. Es kann hierbei vorgesehen sein, dass die Messsonde oder die Führungseinheit mit der Armatur mittels eines Bajonettverschlusses verbindbar ist.

Eine derartige Zwangssteuerung, wobei bei geöffnetem Absperrorgan die Messsonde nicht entnommen werden kann, bietet den Vorteil, dass ein Austreten von unter Druck stehendem Prozessmedium sicher verhindert wird, wenn die Sonde aus dem Prozess entfernt wird, in dem die Armatur geöffnet wird. Das Öffnen der Armatur bei geöffnetem Absperrorgan wird verhindert, indem das Drehen der Zugverschraubung zum Öffnen der Armatur durch den Betätigungshebel des geöffneten Absperrorgans behindert wird. Durch diese mechanische Zwangssteuerung muss immer zuerst das Absperrorgan geschlossen werden. Erst dann ist eine Öffnung der Armatur möglich.

Des Weiteren weist die Wechselarmatur an der Führungseinrichtung einen Anschlag auf, der die Einschubtiefe der Messsonde in die Armatur begrenzt.

Weitere Vorteile und Merkmale der Erfindung ergeben sich aus den übrigen Anmeldungsunterlagen.

Die Erfindung soll im Folgenden anhand einer Zeichnung näher erläutert werden.

Dabei zeigen
- Fig. 1: eine erfindungsgemäße Wechselarmatur,
- Fig. 2: eine Wechselarmatur im Schnitt in zwei Alternativen und
- Fig. 3: einen Ausschnitt aus einer Wechselarmatur

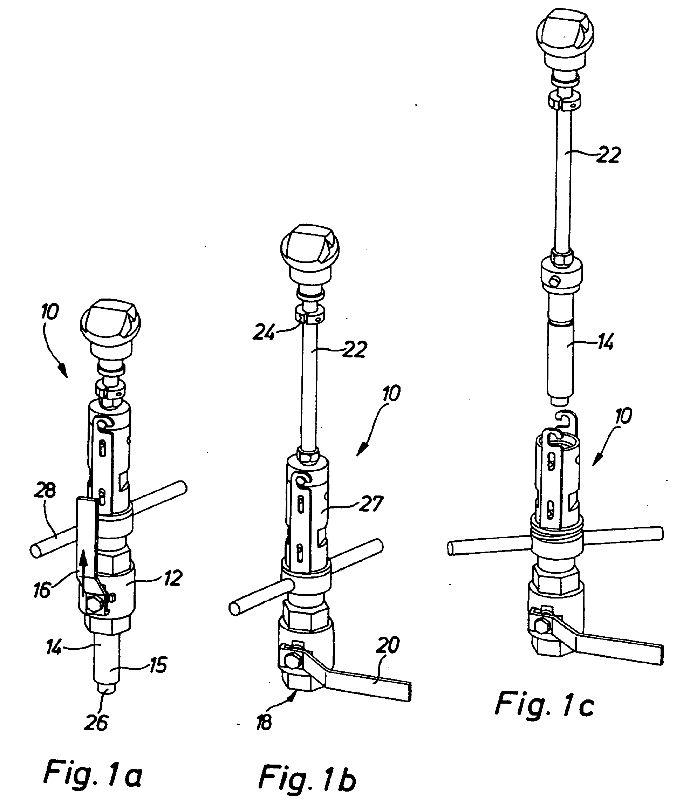

Fig. 1 zeigt eine Wechselarmatur, die in ihrer Gesamtheit mit dem Bezugszeichen 10 gekennzeichnet ist. Die Wechselarmatur 10 umfasst ein Armaturengehäuse 12, eine herausnehmbare in dem Armaturengehäuse 12 axial verschieblich geführte Messsonde 14 zum Einführen in einen nicht dargestellten Behälter. Die Messsonde 14 umfasst einen Sensor 26 und einen Messsondenkörper 15. Am Armaturengehäuse 12 ist ein Absperrorgan 16 angeordnet, das von einer geöffneten Position, wie sie Darstellung a) zeigt in eine geschlossene Position, wie sie Darstellung b) zeigt überführt werden kann, wobei in der geöffneten Position der Darstellung a) die Messsonde 14 durch eine Öffnung 18 hindurchgeschoben werden kann, so dass die Messsonde 14 in das Behälterinnere ragt. Bei dem Absperrorgan 16 handelt es sich um ein Kugelventil mit einem Betätigungshebel 20, wobei der Betätigungshebel 20 bei geöffneter Stellung parallel zur axialen Richtung der Wechselarmatur 10 verläuft. Bei geschlossener Stellung steht der Betätigungshebel 20 senkrecht hierzu.

Darstellung a) zeigt die Wechselarmatur 10 mit der Messsonde 14 in der Messposition, in der die Messsonde 14 in einen Behälter eingeführt ist, wohingegen Darstellung b) eine Stand-by-Position zeigt, bei der das Absperrorgan 16 verschlossen ist und die Messsonde 14 in die Wechselarmatur 10 zurückgezogen wurde. In dieser Position können Sterilisier- oder Kalibriervorgänge durchgeführt werden. Darstellung c) zeigt die Wechselarmatur 10 mit herausgenommener Messsonde 14. An dem der Behälterseite abgewandten Ende der Messsonde 14 ist diese mit einer Führungseinrichtung 22 verbunden, die zur Führung und Halterung der Messsonde 14 dient. Die Führungseinrichtung 22 weist dabei einen Anschlag 24 auf, der die Einschubtiefe der Messsonde 14 in ein Behältnis begrenzt.

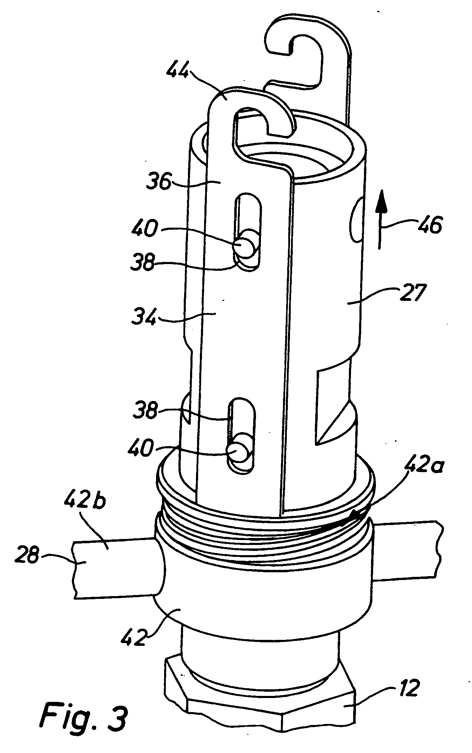

Die Festlegung der Messsonde 14 in der Wechselarmatur 10 erfolgt mittels einer Zugverschraubung 27, die mit dem Armaturengehäuse 12 verbunden ist und die in Fig. 3 näher erläutert werden soll.

Die Messsonde 14 ist mit ihrem Messsondenkörper 15 an einer Stirnseite der Führungseinrichtung 22 angeordnet und befestigt, so dass die Führungseinrichtung 22 einen geringeren Durchmesser aufweisen kann als die Messsonde 14. Der Durchmesser der Messsonde 14 und insbesondere ihres Sensors 26 bestimmt damit die wirksame Fläche, auf die der Prozessüberdruck in einem Behältnis wirkt und gegen den die Messsonde 14 in das Behältnis eingeschoben werden muss.

Durch diese Gestaltung kann beispielsweise bei Verwendung einer Messsonde 14 mit einem Durchmesser von 40 mm die Messsonde 14 gegen einen Druck von 8 bar in ein Behältnis eingeschoben werden. Derartige Messsonden sind damit ebenfalls für beispielsweise Trinkwasseranwendungen geeignet.

Um ein Herausnehmen der Messsonde 14, wie es Darstellung c) zeigt, bei geöffnetem Absperrorgan 16 zu verhindern, ist der Betätigungshebel 20 des Absperrorgans 16 so angeordnet, dass er in seiner geöffneten Stellung, wie sie Darstellung a) zeigt, mit dem Betätigungsmittel 28, nämlich einem Handgriff der Zugverschraubung 27, die zur Festlegung der Messsonde 14 in der Wechselarmatur 10 dient, kollidiert. D.h. der Betätigungsgriff 20 blockiert die Drehbewegung der Zugverschraubung 27 indem er mit dem Betätigungsmittel 28 zusammenwirkt. Die Zugverschraubung 27 kann somit bei geöffnetem Absperrorgan 16 nicht geöffnet werden. Ein Austritt von unter Druck stehendem Medium aus dem Behälter kann somit sicher vermieden werden.

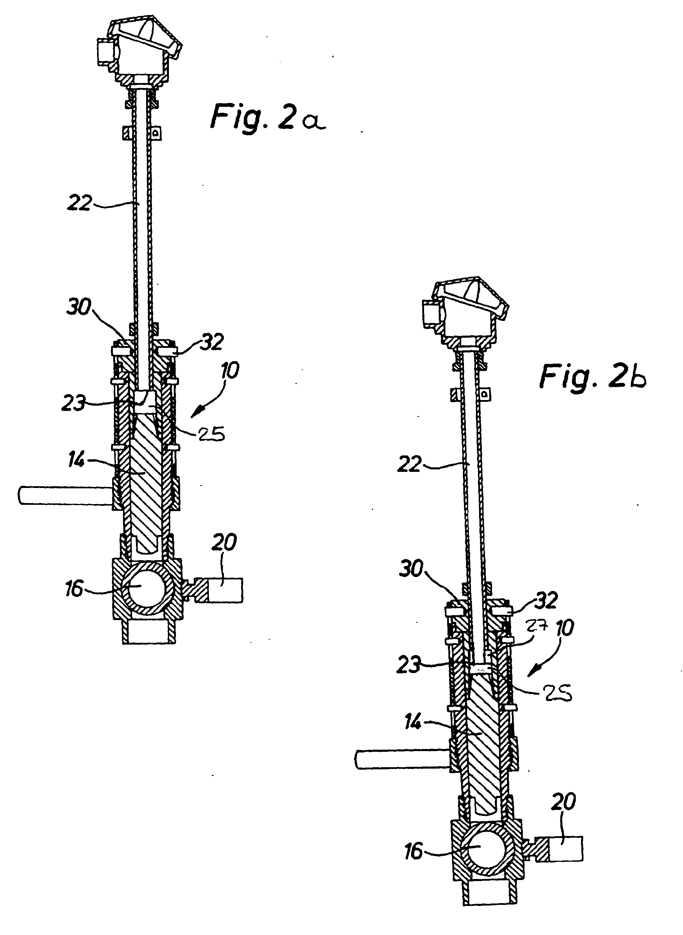

Fig. 2a) zeigt eine Messarmatur 10 gemäß Fig. 1 Darstellung b) im Schnitt. Es kann hierbei gut ersehen werden, dass die Messsonde 14 nicht wie seither üblich in der rohrförmigen Führungseinrichtung 22 montiert ist, sondern an der Stirnseite 23 der Führungseinrichtung 22, die in Richtung auf ein Behälterinneres weist, festgelegt ist. Auf diese Weise können die Durchmesser der Messsonde 14 und der Führungseinrichtung 22 entkoppelt werden, so dass alleinig der Durchmesser der Messsonde 14 der begrenzende Parameter ist, hinsichtlich des Druckes, gegen den die Messsonde 14 in einen Behälter eingeschoben werden kann. Um die Messsonde 14 ganz in die Wechselarmatur 10 zurückziehen zu können, muss die Wechselarmatur 10 eine Länge aufweisen, die wenigstens der Länge der Messsonde 14 in axialer Richtung entspricht. Bei dem vorgesehenen Absperrorgan 16 handelt es sich um ein Kugelventil, das in Fig. 2 in seiner geschlossenen Stellung gezeigt ist.

Die Führungseinrichtung 22 weist oberhalb der Messsonde 14 eine Befestigungshülse 30 auf, wobei die Führungseinrichtung 22 gleitverschieblich in der Befestigungshülse 30 geführt ist. Die Befestigungshülse 30 umfasst zwei radial nach außen vorstehende und einander gegenüber angeordnete Bolzen 32, die mit der Zugverschraubung 27 zum Festlegen der Messsonde 14 in der Wechselarmatur 10 zusammenwirken.

Figur 2b zeigt nun eine alternative Ausgestaltung, bei der die Führungseinrichtung 22 an ihrer Stirnseite 23 ebenfalls mit dem Messsondenkopf 25 verbunden ist. Dieser ist mit Spiel in der Wechselarmatur 10 geführt. Um die Führung beim Verschieben der Messsonde 14 axial zu stabilisieren, ist hier ein Führungsring 27 vorgesehen, der aus einem Kunststoffmaterial besteht und als Gleitring wirkt. Der Führungsring 27 ist dabei an der Führungseinrichtung 22 festgelegt und gleitet an der Innenwandung der Wechselarmatur 10 entlang wenn die Führungseinrichtung 22 in die Messstellung gebracht wird. Der Führungsring 27 liegt dabei gegen den Messsondenkopf 25 mit einer Seite an.

Der Verschleiß an den Bauteilen kann dadurch vermindert werden.

Die Festlegung der Messsonde 14 mittels der Zugverschraubung 27 soll nun anhand Fig. 3 näher erläutert werden. Fig. 3 zeigt das Armaturengehäuse 12 mit der Zugverschraubung 27. Die Zugverschraubung 27 umfasst dabei eine Zugeinheit 34, die aus zwei einander am Armaturengehäuse 12 gegenüberliegenden Seiten angeordneten Schenkeln 36 besteht, wobei jeder der Schenkel 36 zwei Langlöcher 38 aufweist, in denen Stifte 40, die fest mit dem Armaturengehäuse 12 verbunden sind, verschieblich geführt sind. Hierdurch wird die Zugverschraubung 27 während eines Öffen- oder Schließvorganges axial geführt.

Des weiteren umfasst die Befestigungseinrichtung oder Zugverschraubung 27 eine zweiteilige Verschraubung oder Verschraubungseinheit 42, wobei ein Teil der Verschraubungseinheit 42a, der ein Außengewinde aufweist, fest mit der Zugeinheit 34 verbunden ist. Der zweite Bestandteil der Zugeinrichtung 42, 42b der ein Innengewinde besitzt und mit dem Teil 42a über eine Schraubverbindung verbunden ist, ist mit dem Betätigungsmittel 28 verbunden. Die Zugeinheit 34 weist an ihrem oberen freien Ende Haken 44 auf, in die die Bolzen 32 der Befestigungshülse 30 formschlüssig einrastbar sind.

Wird nun die Verschraubungseinheit 42 geöffnet, d.h., die beiden Teile 42a,b werden auseinander geschraubt, so dass sich der Teil 42b in Richtung auf das Behälterseitenende der Armatur bewegt, so bewegen sich die beiden Schenkel 36 der Zugeinheit 34 in Richtung des Pfeiles 46, so dass die Messsonde 14 nicht länger mit der Wechselarmatur 10 verspannt ist. Die Bolzen 32 können dann aus den Haken 44 entfernt werden, so dass der Bajonettverschluss der Zugeinheit 34 geöffnet wird. Ein völliges Trennen der beiden Teile 42a,b ist nicht möglich.

Die Messsonde 14 kann dann aus dem Armaturengehäuse 12 entnommen werden.

## Patentansprüche

1. Wechselarmatur mit einem Armaturengehäuse (12), einer herausnehmbaren, in dem Gehäuse (12) axial verschieblich geführten Messsonde (14) zum Einführen in einen Behälter, einem die Wechselarmatur (10) gegenüber dem Behälterinneren verschließenden Absperrorgan (16) und einer axial im Gehäuse (12) verschieblich geführten Führungseinrichtung (22) zur Halterung und Führung der Messsonde (14) im Armaturengehäuse (12) zwischen einer Messposition, in der die Messsonde (14) in den Behälter eingeführt ist und einer Stand-by-Position, in der sich die Messsonde (14) innerhalb des Armaturengehäuses (12) befindet, wobei die Messsonde (14) einen Messsondenkörper (15) und einen Sensor (26) umfasst und bei der die Messsonde (14) mit ihrem Messsondenkörper an der Stirnseite (23) der Führungseinrichtung festgelegt ist, wobei der Sensor (26) an der freien, in Richtung auf den Behälter weisenden Seite des Messsondenkörpers (15) befestigt ist, **dadurch gekennzeichnet, dass** der Querschnitt der Führungseinrichtung kleiner ist als der Querschnitt der Messsonde (14) und die Wechselarmatur (10) eine Befestigungseinrichtung aufweist, die die Messsonde (14) in der Mess- sowie der Stand-by-Position an der Wechselarmatur (10) festlegt, wobei die Befestigungseinrichtung mit dem Absperrorgan (16) zusammenwirkt, um ein Herausnehmen der Messsonde (14) bei geöffnetem Absperrorgan (16) zu verhindern.

2. Wechselarmatur nach Anspruch 1, **dadurch gekennzeichnet, dass** das Absperrorgan (16) einen Betätigungshebel (20) aufweist, der ein Betätigungsmittel (28) der Befestigungseinrichtung in seiner Stellung bei geöffnetem Absperrorgan (16) blockiert.

3. Wechselarmatur nach Anspruch 1 oder 2, **dadurch gekennzeichnet, dass** die Befestigungseinrichtung eine Zugverschraubung (27) umfasst, die eine Zugeinheit (34) und eine Verschraubungseinheit (42) aufweist, wobei die Zugeinheit (34) an der Wechselarmatur (10) geführt ist und die Zugeinheit (34) und die Messsonde (14) und/oder die Führungseinrichtung (22) in Formschluss bringbar sind, wobei durch Drehen der Verschraubungseinheit (42) die Zugeinheit (34) mit der Messsonde (14) und/oder der Führungseinrichtung (22) verspannbar ist.

4. Wechselarmatur nach einem oder mehreren der vorhergehenden Ansprüche, **dadurch gekennzeichnet, dass** die Messsonde (14) und/oder die Führungseinrichtung (22) mittels eines Bajonettverschlusses mit der Zugverschraubung (27) verbindbar ist.

5. Wechselarmatur nach einem oder mehreren der vorhergehenden Ansprüche, **dadurch gekennzeichnet, dass** die Führungseinrichtung (22) einen Anschlag (24) umfasst, der die Einschubtiefe der Messsonde (14) in einen Behälter begrenzt.

6. Wechselarmatur nach einem oder mehreren der vorhergehenden Ansprüche, **dadurch gekennzeichnet, dass** die Führungseinrichtung (22) durch einen Führungsring (23) umschlossen ist, der gleitverschieblich in der Wechselarmatur (10) geführt ist und die Führungseinrichtung (22) axial in der Wechselarmatur (10) stabilisiert.

## Claims

1. Interchangeable fitting with a fitting housing (12), a removable measurement probe (14), which is axially displaceably guided in the housing (12), for insertion into a container, a shut-off element (16) which closes the interchangeable fitting (10) relative to the interior of the container, and a guide means (22), which is axially displaceably guided in the housing (12), for holding and guiding the measurement probe (14) in the fitting housing (12) between a measurement position in which the measurement probe (14) has been inserted into the container, and a stand-by position in which the measurement probe (14) is located within the fitting housing (12), the measurement probe (14) comprising a measurement probe body (15) and a sensor (26), and the measurement probe (14) being fixed by its measurement probe body (15) on the end face (23) of the guide means, the sensor (26) being fastened to the free side of the measurement probe body (15) facing in the direction of the container, **characterised in that** the cross section of the guide means is smaller than the cross section of the measurement probe (14), and the interchangeable fitting (10) has a fastening means which fixes the measurement probe (14) to the interchangeable fitting (10) in the measurement position and the stand-by position, the fastening means interacting with the shut-off element (16) in order to prevent removal of the measurement probe (14) when the shut-off element (16) is opened.

2. Interchangeable fitting according to Claim 1, **characterised in that** the shut-off element (16) has an actuating lever (20) which blocks an actuating means (28) of the fastening means in its position when the shut-off element (16) is opened.

3. Interchangeable fitting according to Claim 1 or 2, **characterised in that** the fastening means comprises a tension screw union (27) which has a tension unit (34) and a screw connection unit (42), the tension unit (34) being guided on the interchangeable fitting (10) and it being possible for the tension unit (34) and the measurement probe (14) and/or the guide means (22) to be brought into positive-locking engagement, and by turning the screw connection unit (42) the tension unit (34) can be braced with the measurement probe (14) and/or the guide means (22).

4. Interchangeable fitting according to one or more of the preceding claims, **characterised in that** the measurement probe (14) and/or the guide means (22) can be connected to the tension screw union (27) by means of a bayonet catch.

5. Interchangeable fitting according to one or more of the preceding claims, **characterised in that** the guide means (22) comprises a stop (24) which limits the insertion depth of the measurement probe (14) into a container.

6. Interchangeable fitting according to one or more of the preceding claims, **characterised in that** the guide means (22) is surrounded by a guide ring (23) which is slidably guided in the interchangeable fitting (10) and which stabilises the guide means (22) axially in the interchangeable fitting (10).

## Revendications

1. Sonde rétractable dotée d'un boîtier de sonde (12), d'une sonde de mesure (14) coulissant dans le sens axial dans le boîtier (12) destinée à l'introduction dans un réservoir, d'un organe d'arrêt (16) obturant la sonde rétractable (10) par rapport à l'intérieur du réservoir et d'un dispositif de guidage (22) coulissant dans le sens axial dans le boîtier (12), lequel dispositif est destiné à la fixation et au guidage de la sonde de mesure (14) dans le boîtier de sonde (12) entre une position de mesure, dans laquelle la sonde de mesure (14) est introduite dans le réservoir et une position d'attente, dans laquelle la sonde de mesure (14) se trouve à l'intérieur du boîtier de sonde (12), la sonde de mesure (14) comportant un corps de sonde de mesure (15) et un capteur (26) et où la sonde de mesure (14) est fixée avec son corps de sonde de mesure sur la face frontale (23) du dispositif de guidage, le capteur (26) étant fixé sur le côté libre du corps de sonde de mesure (15) orienté vers le réservoir, **caractérisé en ce que** la section du dispositif de guidage est inférieure à la section de la sonde de mesure (14) et **en ce que** la sonde rétractable (10) comprend un dispositif de fixation, qui fixe sur la sonde rétractable (10) la sonde de mesure (14) dans la position de mesure ainsi que dans la position d'attente, le dispositif de fixation interagissant avec l'organe d'arrêt (16) afin d'empêcher une extraction de la sonde de mesure (14) lorsque l'organe d'arrêt (16) est ouvert.

2. Sonde rétractable selon la revendication 1, **caractérisée en ce que** l'organe d'arrêt (16) comporte un levier de commande (20), qui bloque un moyen d'actionnement (28) du dispositif de fixation dans sa position lorsque l'organe d'arrêt (16) est ouvert.

3. Sonde rétractable selon la revendication 1 ou 2, **caractérisée en ce que** le dispositif de fixation comprend un dispositif de vissage-traction (27), qui se compose d'une unité de traction (34) et d'une unité de vissage (42), l'unité de traction (34) étant guidée sur la sonde rétractable (10) et l'unité de traction (34) et la sonde de mesure (14) et/ou le dispositif de guidage (22) pouvant être amenés en position de blocage (engagement positif), l'unité de traction (34) pouvant être serrée avec la sonde de mesure (14) et/ou le dispositif de guidage (22) par rotation de l'unité de vissage.

4. Sonde rétractable selon une ou plusieurs des revendications précédentes, **caractérisée en ce que** la sonde de mesure (14) et/ou le dispositif de guidage (22) peuvent être reliés au moyen d'une fermeture à baïonnette avec le dispositif de vissage-traction (27).

5. Sonde rétractable selon une ou plusieurs des revendications précédentes, **caractérisée en ce que** le dispositif de guidage (22) comporte une butée (24), qui limite la profondeur d'introduction de la sonde de mesure (14) dans un réservoir.

6. Sonde rétractable selon une ou plusieurs des revendications précédentes, **caractérisée en ce que** le dispositif de guidage (22) est entouré d'une bague de guidage (23), qui coulisse dans la sonde rétractable (10) et stabilise le dispositif de guidage (22) dans le sens axial à l'intérieur de la sonde rétractable (10).
